# EUROPÄISCHE PATENTSCHRIFT

(11) **EP 2 053 292 B1**
(45) Veröffentlichungstag und Bekanntmachung des Hinweises auf die Patenterteilung: **21.12.2011**
(21) Anmeldenummer: 07405316.6
(22) Anmeldetag: 24.10.2007
(51) Int. Cl.: F16L 19/00, F16B 39/24

(54) **Sicherungsanordnung für eine Verschraubung**
Safety device for a screw connection
Agencement de sécurité pour un boulonnage

(43) Veröffentlichungstag der Anmeldung: 29.04.2009
(73) Patentinhaber: Georg Fischer JRG AG, 4450 Sissach (CH)
(72) Erfinder: Bürli, Stephan, 4463 Buus (CH)
(74) Vertreter: De Colle, Piergiacomo

(56) Entgegenhaltungen:
- EP-A- 0 174 812
- EP-A- 1 022 504
- WO-A-2005/111439
- DE-A1- 3 924 773
- GB-A- 2 194 999
- US-A- 4 408 927

## Beschreibung

### Anwendunasgebiet der Erfindung

Die Erfindung betrifft eine Sicherungsanordnung für eine Verschraubung. Ein erster Teil der Anordnung hat ein Aussengewinde und eine dazu benachbarte Profilierung. Ein zweiter Teil der Anordnung ist mit dem ersten Teil verschraubbar und besitzt ein zum Aussengewinde des ersten Teils komplementäres Innengewinde sowie eine dazu benachbarte Gegenprofilierung. Zwischen dem ersten Teil und dem zweiten Teil ist ein Sicherungsring eingesetzt, der einen Aussenumfang und einen Innenumfang hat. Am Aussenumfang sind erste Rastelemente angeordnet, welche mit der Gegenprofilierung in Eingriff stehen. Am Innenumfang des Sicherungsrings sind zweite Rastelemente angeordnet, welche mit der Profilierung in Eingriff sind. Zwischen den ersten Rastelementen und den zweiten Rastelementen liegen Verbindungsstege. Typischerweise ist der erste Teil ein Fitting und der zweite Teil eine zugehörige Überwurfmutter, die bei Rohrinstallationen, z.B. für ein Hauswassernetz, Anwendung finden.

### Stand der Technik

Die Firma GFV Verschlusstechnik GmbH & Co. KG, D-72271 Alpirsbach-Peterzeil / Deutschland, bietet auf ihrer Homepage mehrere Sicherheitsverschlüsse in unterschiedlichen Durchmessern sowie Ausführungen an, z.B. die ArtikelbezeiChnung SKGS42210R00. Der Sicherheitsverschluss in Form einer Verschraubung besteht zunächst aus einem Behälterstutzen mit Aussengewinde und dazu angrenzender Profilierung, einem Schraubdeckel mit Innengewinde und benachbarten Gegenprofilierung sowie einem Sicherungsring mit Aussen- und Innenumfang. Am Aussenumfang des Sicherungsrings sind Kerbkonturen angeordnet, die mit der Gegenprofilierung am Schraubdeckel in Eingriff stehen. Am Innenumfang des Sicherungsrings sind elastische Rastelemente vorhanden, welche mit der Profilierung am Behälterstutzen in Eingriff sind. Vorgenannter Sicherheitsverschluss bezweckt zwar auch die Verhinderung des unbeabsichtigten Lösens des Schraubdeckels, hat aber eher die Funktion die Verschraubung bis zum ersten Öffnen zu versiegeln. Der Sicherungsring ist mit dem Schraubdeckel im versiegelten Zustand fest verbunden, wobei die Verbindung zwischen den beiden Tellen beim Abschrauben des Schraubdeckels reisst und somit nur einen einmaligen Gebrauch erlaubt.

Aus der DE 39 24 773 A1 ist eine Sicherung für eine Schraubenverbindung bekannt. Dabei ist ein Sicherungselement in Gestalt einer schraubenförmigen Feder in einem Freiraum angeordnet. Der Freiraum befindet sich zwischen einem ersten Teil und einem zweiten Teil, der sich beim gegenseitigen Verschrauben der beiden Teile verengt. Dadurch wird den Federwindungen eine einseitige Verschiebung in Einschraubrichtung aufgezwungen mit der Folge, dass einem ungewollten Lösen ein Sicherungsmoment entgegensteht, welches mindestens dem Anziehmoment entspricht. Sofern die Kontaktflächen am ersten Teil und am zweiten Teil, an denen die Feder anliegt, profiliert sind, kann das Sicherungsmoment en Mehrfaches des Anziehmoments betragen.

### Aufgabe der Erfindung

Angesichts der aus dem gegenwärtigen Stand der Technik bekannten Lösungen mit ihren beschränkten Einsatzmöglichkeiten und konstruktiven Unvollkommertheiten, liegt der Erfindung die Aufgabe zugrunde, eine verbesserte Sicherungsanordnung für eine Verschraubung zwischen einem Aussengewindestutzen und einer darauf aufschraubbaren Mutter unter Verwendung eines Slcherungsrings vorzuschlagen. Die Sicherungsanordnung zielt darauf ab, das unbeabsichtigte Lösen der aufgeschraubten Mutter zu verhindern und die Intensität der Lösehemmung je nach Verwendungszweck und Dimensionierung der Sicherungsanordnung angepasst zu gestalten.

Eine weitere Aufgabe besteht darin, die Sicherungsanordnung für eine Verschraubung zwischen einem Fitting und einer Überwurfmutter für den Einsatz in Rohrleitungsinstallationen auszubilden. Hierbei kommt es darauf an, den Vorgang der Montage der Sicherungsanordnung möglichst unaufwendig zu gestalten und beim gezielten Lösen der Verschraubung keine Beschädigungen an den beteiligten Bauteilen zu verursachen. Schliesslich soll sich die Sicherungsanordnung zu effizienten Kosten in Serie herstellen lassen.

### Übersicht über die Erfindung

Die Sicherungsanordnung für eine Verschraubung hat einen ersten Teil mit einem Aussengewinde und einer dazu benachbarten Profilierung. Mit diesem ersten Teil ist ein zweites Teil verschraubbar, das dazu ein zum Aussengewinde des ersten Teils komplementäres Innengewinde sowie eine dazu benachbarte Gegenprofilierung besitzt. Zwischen dem ersten Teil und dem zweiten Teil ist ein Sicherungsring einsetzbar, der einen Aussenumfang und einen Innenumfang aufweist. Am Aussenumfang sind erste Rastelemente angeordnet, welche mit der Gegenprofilierung in Eingriff stehen. Am Innenumfang des Sicherungsrings sind zweite Rastelemente angeordnet, welche mit der Profilierung in Eingriff sind. Zwischen den ersten Rastelementen und den zweiten Rastelementen liegen Verbindungsstege. Von jedem ersten Rastelement geht ein erster S-förmig gekrümmter Verbindungssteg ab, der sich zu einem benachbarten zweiten Rastelement erstreckt und von diesem ersten Rastelement geht zugleich ein zweiter gerade erstreckender Verbindungssteg ab, der sich zu einem nächsten zweiten Rastelement erstreckt, wobei die ersten und zweiten Rastelement die Gestalt von konvex geformten Nocken haben und die ersten Verbindungsstege eine geringere Biegesteifigkeit als die zweiten Verbindungsstege aufweisen. Die Gegenprofilierung mit den daran anliegenden ersten Rastelementen erfordert beim Abschrauben des zweiten Teils ein Lösemoment, das grösser ist als das Anzugsmoment beim Aufschrauben des zweiten Teils.

Die nachfolgenden Merkmale beziehen sich auf spezielle Ausführungen der Erfindung: Die ersten und zweiten Verbindungsstege sind in alternierender Folge angeordnet sind, indem sich an beide Enden jedes ersten Verbindungsstegs jeweils ein zweiter Verbindungssteg anschiesst. Die ersten und zweiten Verbindungsstege haben einen unterschiedlichen Konturverlauf und somit auch unterschiedliche Biegesteifigkeiten. Am Aussenumfang befindet sich jeweils ein erstes Rastelement am Übergang von einem ersten Verbindungssteg zu einem zweiten Verbindungssteg. Am Innenumfang befindet sich jeweils ein zweites Rastelement am Übergang von einem ersten Verbindungssteg zu einem zweiten Verbindungssteg. Die ersten Verbindungsstege sind S-förmig gekrümmt und die zweiten Verbindungsstege erstrecken sich gerade. Die ersten und zweiten Rastelemente haben die Gestalt von konvex geformten Nocken. Die ersten Verbindungsstege weisen eine geringere Biegesteifigkeit als die zweiten Verbindungsstege auf.

Die Profilierung am ersten Teil ist als äusserlich radial umlaufende Verzahnung, gebildet aus alternierend aufeinander folgenden Spitzen und Aussparungen, beschaffen. Im montierten Zustand, bei auf das erste Teil aufgebrachtem Sicherungsring, kommen in den Aussparungen die zweiten Rastelemente des Sicherungsrings zu liegen kommen. Die Gegenprofilierung am zweiten Teil ist am Boden einer Ringnut als innerlich radial umlaufende Wellenstruktur, gebildet aus alternierend aufeinander folgenden Erhebungen und Mulden, beschaffen. Im weiter montierten Zustand, bei miteinander verschraubtem ersten und zweiten Teil, kommen in den Mulden die ersten Rastelemente des Sicherungsrings zu liegen.

Im montierten Zustand, bei auf das erste Teil aufgebrachtem Sicherungsring und miteinander verschraubtem ersten und zweiten Teil, sind die sich jeweils zwischen einem ersten Rastelement und einem zweiten Rastelement sich innerhalb der Ringnuten erstreckenden zweiten Verbindungsstege des Sicherungsrings der Löserichtung des zweiten Teils schräg entgegenstemmend und zur Anzugsrichtung gleichsinnig schräg angeordnet. Das beim Abschrauben des zweiten Teils vom ersten Teil erforderliche Lösemoment ist mit der Wahl der Steilheit in der Wellenstruktur, d.h. an den Erhebungen und Mulden, der Wahl der von den S-förmigen Verbindungsstegen generierten Federkraft, der Winkelausrichtung der zweiten Verbindungsstege und der Geometrie der ersten Rastelemente einstellbar.

Das erste Teil hat die Gestalt eines Fittings mit einem Mittelstück, daran ansetzenden Abgängen und einem Durchgang. Die Abgänge sind jeweils mit einem nach aussen endenden Aussengewinde, einer sich daran anschliessenden Ringnut, in welcher die Profilierung angeordnet ist, und einem die Ringnut zum Mittelstück abgrenzenden Flansch versehen. Das zweite Teil hat die Gestalt einer Überwurfmutter mit einer Aussenprofilierung zum Erfassen bei der Montage.

Zur Montage des Sicherungsrings auf der Profilierung des ersten Teils sind ein Transferstück und ein Schiebestück vorgesehen. Das Transferstück hat eine Zylinderpartie und eine sich daran anschliessende, zu ihrem freien Ende hin verjüngende Konuspartie sowie intern der Zylinderpartie einen inneren Freiraum zur Aufnahme des Bereichs am Abgang, welcher der Profilierung zum freien Ende des Abgangs hin vorgelagert ist. Die Einstecktiefe des Abgangs in das Transferstück ist durch einen Anschlag begrenzt und die Aussengestalt des Transferstücks wird durch dessen Aussenmantel definiert. Das Schiebestück hat eine Zylinderpartie und eine sich daran anschliessende Spreizpartie mit einem inneren Freiraum, und die Spreizpartie weist durch systematisch axial angeordnete Schlitze eine Vielzahl von elastischen Zungensegmenten auf. Der Freiraum im Schiebestück ist komplementär zur Aussengestalt des Transferstücks beschaffen. Die von den Zungensegmenten umrandete Eintrittsöffnung in das Schiebestück entspricht zumindest der Grösse des Durchmessers am freien Ende der Konuspartie des Transferstücks. Der Innendurchmesser am freien Ende der Spreizpartie lässt sich elastisch zumindest bis auf den Aussendurchmesser der Zylinderpartie des Transferstücks aufweiten, um den zunächst auf die Konuspartie des Transferstücks aufgesteckten Sicherungsring mittels des Schiebestücks weiter über den Aussenmantel bis in die Ringnut des ersten Teils zu befördern. Der beim Transport über den Aussenmantel elastisch aufgeweitete Sicherungsring umspannt in der bestimmungsgemässen Endlage in der Ringnut liegend, die darin vorhandene Profilierung

Der Sicherungsring besteht aus einem elastischen Kunststoff und ist im Spritzgussverfahren hergestellt.

### Kurzbeschreibung der beigefügten Zeichnungen

Es zeigen:

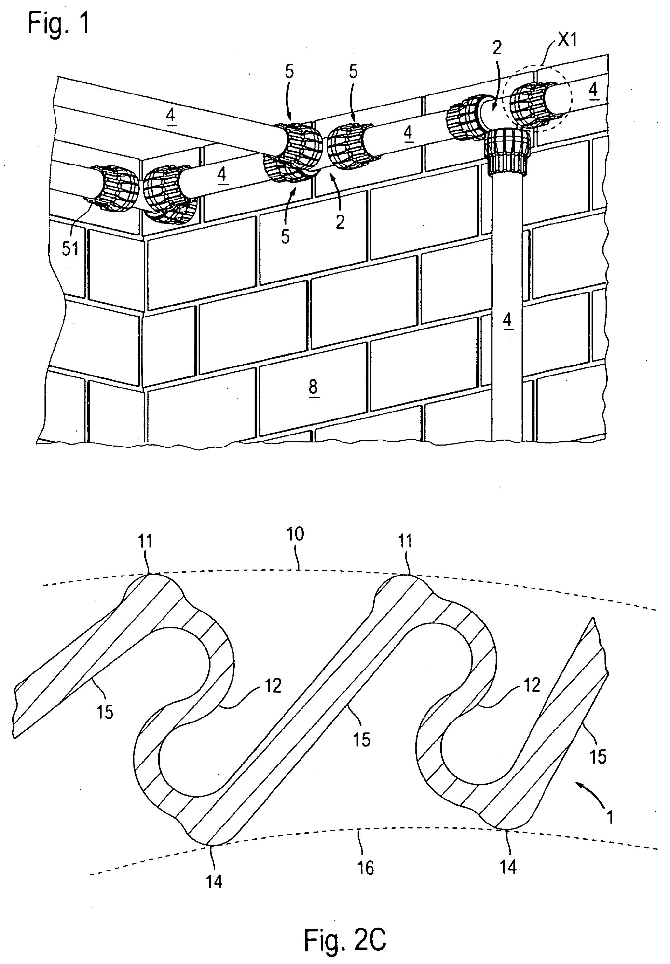

- Figur 1 -: eine Rohrleitungsverzweigung in einem Gebäude mit T-Stücken und Überwurfmuttern, in Perspektivansicht;

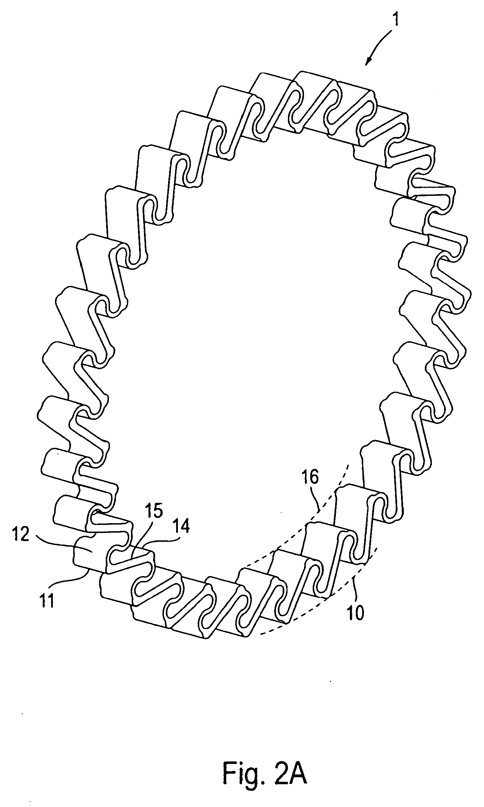

- Figur 2A -: einen Sicherungsring in einer ersten Ausführungsform, in Perspek- tivansicht;

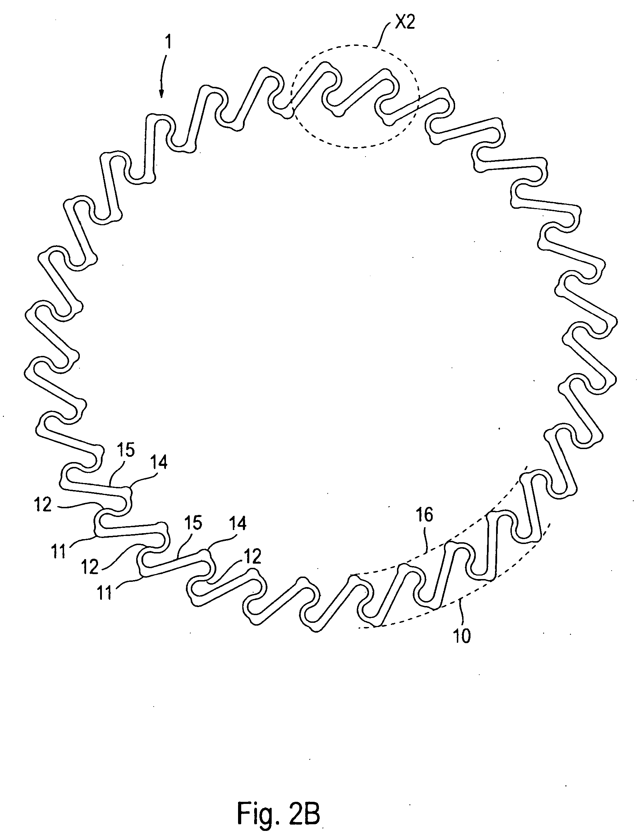

- Figur 2B -: den Sicherungsring gemäss Figur 2A, in Vorderansicht;
- Figur 2C -: das vergrösserte Detail X2 aus Figur 2B, im Schnitt;

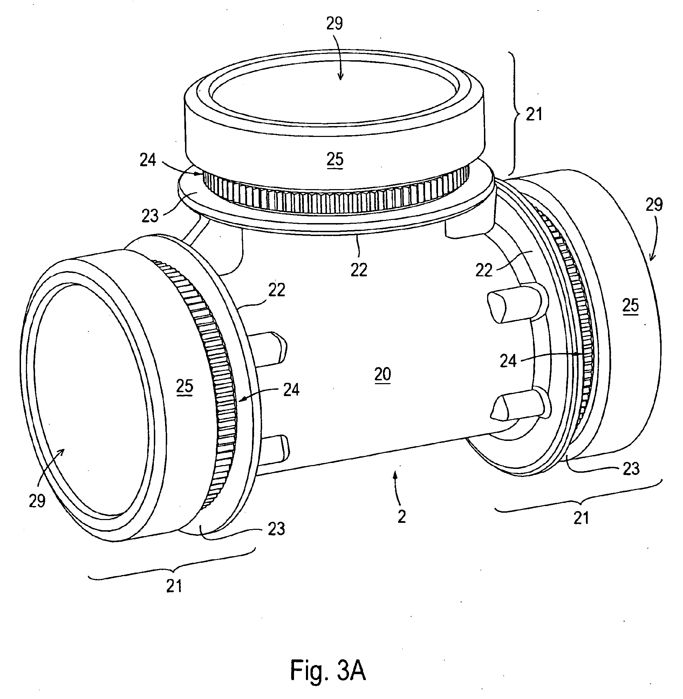

- Figur 3A -: einen Fitting aus Figur 1, in vergrösserter Perspektivansicht;

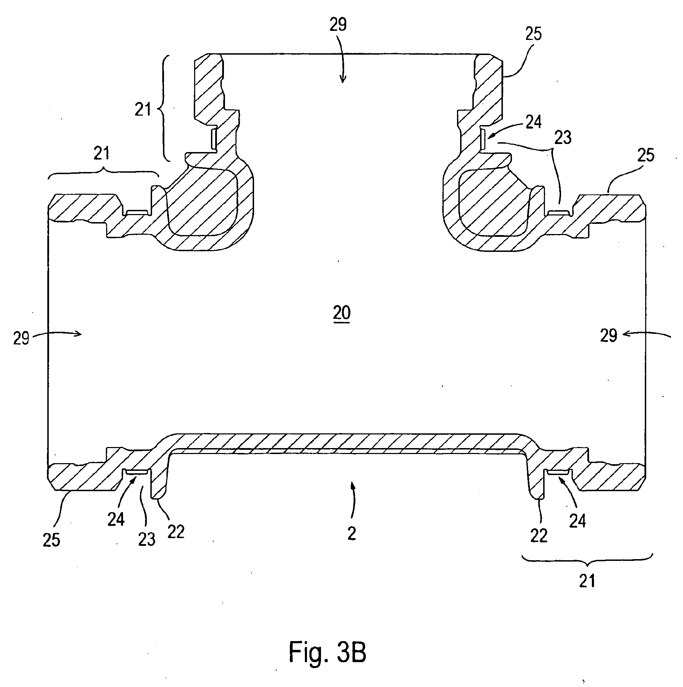

- Figur 3B -: den Fitting gemäss Figur 3A, im Schnitt;
- Figur 4A -: den Fitting aus Figur 3A mit angenähertem Transferstück, in ge- wechselter Perspektivansicht;
- Figur 4B -: die Anordnung gemäss Figur 4A mit auf den Fitting aufgesetztem Transferstück, darauf aufgeschobenem Sicherungsring und ange- nähertem Schiebestück, in Perspektivansicht;
- Figur 4C -: die Anordnung gemäss Figur 4B mit aufgestecktem Schiebestück und dem Sicherungsring nahe seiner Endlage, in Perspektivan- sicht;
- Figur 4D -: den Fitting gemäss Figur 3A mit montiertem Sicherungsring, in Perspektivansicht;

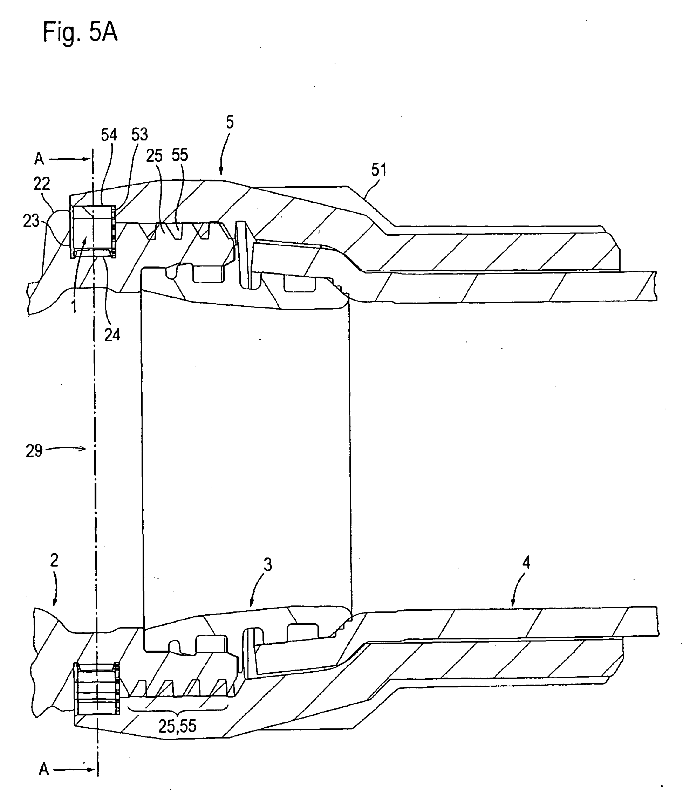

- Figur 5A -: das vergrösserte Detail X1 aus Figur 1, im Schnitt;

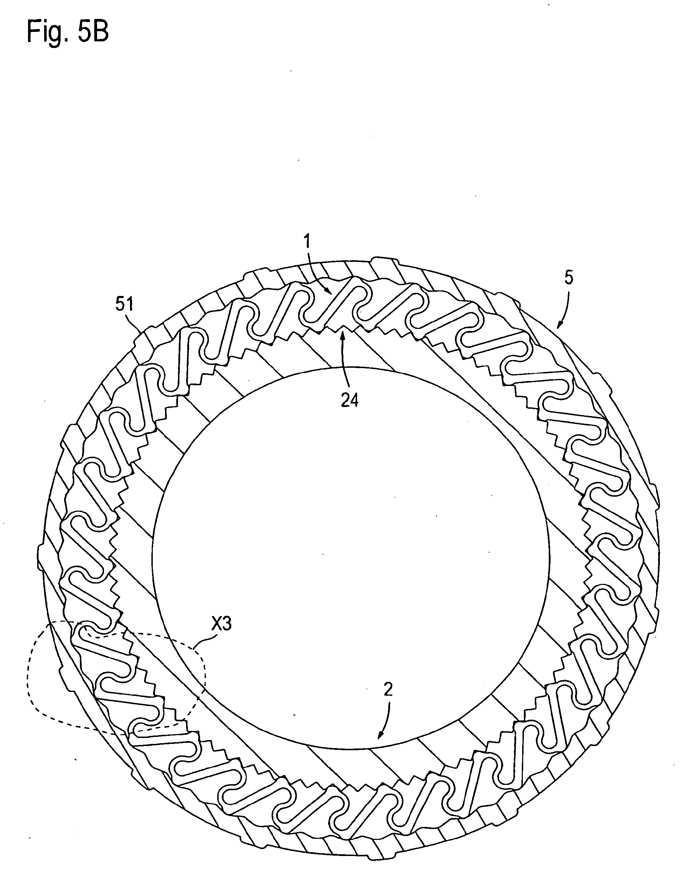

- Figur 5B -: den Schnitt entlang der Linie A - A gemäss Figur 5A;
- Figur 5C -: das vergrösserte Detail X3 aus Figur 5B.

### Ausführunasbeispiele

Mit Bezug auf die beiliegenden Zeichnungen erfolgt nachstehend die detaillierke Beschreibung eines Ausführungsbeispiels zur erfindungsgemässen Sicherungsanordnung.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figur 1

Ein in einem Raum, vorzugsweise benachbart, entlang eines Mauerwerks **8** verlaufendes Rohrleitungsnetz, z.B. Bestandteil der Kalt- oder Warmwasserversorgung bzw. der Heizungsanlage eines Gebäudes, ist typischerweise verzweigt und besitzt als solches Abzweigungen und Reduktionen. Der gezeigte Ausschnitt besteht aus mehreren Abschnitten in Form von Verbundrohren **4,** die auf erste Teile **2,** in Form von Fittingen **2** zulaufen oder von diesen abgehen. Im vorliegenden Beispiel sind die Fittinge **2** T-Stücke, wobei sich die jeweils drei Anschlüsse des linken und des in der Mitte positionierten Fittings **2** in der Horizontalebene erstrecken, während der mittige Anschluss des rechten Fittings **2** senkrecht nach unten weist. Mit jeweils drei Überwurfmuttern **5** sind die an einem Fitting **2** ansetzenden Rohrenden der Verbundrohre **4** angeschlossen. Die Fittinge **2** und überwurfmuttern **5** sind durch Schraubverbindungen miteinander verbunden. Die Aussenprofilierung **51** an den Überwurfmuttern **5** dient zum Eingriff mit einem Schraubwerkzeug.

### Figuren 2A bis 2C

Am Sicherungsring lässt sich ein Aussenumfang **10** und ein Innenumfang **16** definieren. Am Aussenumfang **10** sind erste Rastelemente **11** angeordnet und am Innenumfang **16** zweite Rastelemente **14**. Zwischen den ersten Rastelementen **11** und den zweiten Rastelementen **14** liegen Verbindungsstege **12**,**15**. Von jedem ersten Rastelement **11** geht ein erster Verbindungssteg **12** ab, der sich zu einem benachbarten zweiten Rastelement **4** erstreckt und von diesem ersten Rastelement **11** geht zugleich ein zweiter Verbindungssteg **15** ab, der sich zu einem nächsten zweiten Rastelement **14** erstreckt.

Die ersten und zweiten Verbindungsstege **12**,1**5** sind in alternierender Folge angeordnet, indem sich an beide Enden jedes ersten Verbindungsstegs **12** jeweils ein zweiter Verbindungssteg **15** anschiesst. Die ersten und zweiten Verbindungsstege **12**,**15** haben einen unterschiedlichen Konturverlauf und haben somit auch unterschiedliche Biegesteifigkeiten. Am Aussenumfang **10** befindet sich jeweils ein erstes Rastelement **11** am Übergang von einem ersten Verbindungssteg **12** zu einem zweiten Verbindungssteg **15**. Am Innenumfang **16** befindet sich jeweils ein zweites Rastelement **14** am Übergang von einem ersten Verbindungssteg **12** zu einem zweiten Verbindungssteg **15.** Die ersten Verbindungsstege **12** sind S-förmig gekrümmt und die zweiten Verbindungsstege **15** erstrecken sich gerade. Die ersten und zweiten Rastelemente **11**,**14** haben die Gestalt von konvex geformten Nocken. Die ersten Verbindungsstege **12** weisen eine geringere Biegesteifigkeit auf als die zweiten Verbindungsstege **15**.

Das beim Abschrauben des zweiten Teils **5** vom ersten Teil **2** erforderliche Lösemoment ist u.a. mit der Wahl der von den S-förmigen Verbindungsstegen **12** generierten Federkraft, der Winkelausrichtung der zweiten Verbindungsstege **15** und der Geometrie der ersten Rastelemente **11** einstellbar ist. Vorteilhaft besteht der Sicherungsring **1** aus einem elastischen Kunststoff und ist im Spritzgussverfahren hergestellt ist.

### Figuren 3A und 3B

Das erste Teil **2** der Sicherungsanordnung hat ein Aussengewinde **25** und eine dazu benachbarte Profilierung **24**. Die Profilierung **24** am ersten Teil **2** ist als äusserlich radial umlaufende Verzahnung, gebildet aus alternierend aufeinander folgenden Spitzen **240** und Aussparungen **241**, beschaffen. Das Teil **2** hat z.B. die Gestalt eines Fittings mit einem Mittelstück **20**, daran ansetzenden Abgängen **21** und einem Durchgang **29.** Die Abgänge **21** sind jeweils mit einem nach aussen endenden Aussengewinde **25**, einer sich daran anschliessenden Ringnut **23**, in welcher die Profilierung **24** angeordnet ist, und einem die Ringnut **23** zum Mittelstück **20** abgrenzenden Flansch **22** versehen.

### Figur 4A bis 4D

Zum Aufbringen des Sicherungsrings **1** auf die Profilierung **24** am ersten Teil **2** sind ein Transferstück **6** und ein Schiebestück **7** vorgesehen. Das Transferstück **6** hat eine Zylinderpartie **61** und eine sich daran anschliessende, zu ihrem freien Ende hin verjüngende Konuspartie **62** sowie intern der Zylinderpartie **61** einen inneren Freiraum **69** zur Aufnahme des Bereichs am Abgang **21**, welcher der Profilierung **24** zum freien Ende des Abgangs **21** hin vorgelagert ist. Die Einstecktiefe des Abgangs **21** in das Transferstück **6** ist durch einen Anschlag begrenzt und die Aussengestalt des Transferstücks **6** wird durch dessen Aussenmantel **60** definiert. Der Anschlag ergibt sich z.B. durch die konische Verjüngung, welche am Übergang von der Zylinderpartie **61** zur Konuspartie **62** einsetzt.

Das Schiebestück **7** hat eine Zylinderpartie **71** und eine sich daran anschliessende Spreizpartie **72** mit einem inneren Freiraum **79**. Die Spreizpartie **72** weist durch systematisch axial angeordnete Schlitze **74** eine Vielzahl von elastischen Zungensegmenten **73** auf. Der Freiraum **79** im Schiebestück **7** ist komplementär zur Aussengestalt des Transferstücks **6** beschaffen. Im unbenutzten Zustand entspricht die von den Zungensegmenten **73** umrandete Eintrittsöffnung in das Schiebestück **7** zumindest der Grösse des Durchmessers am freien Ende der Konuspartie **62** des Transferstücks **6.** Der Innendurchmesser am freien Ende der Spreizpartie **72** lässt sich elastisch zumindest bis auf den Aussendurchmesser der Zylinderpartie **61** des Transferstücks **6** aufweiten.

Das Aufbringen des Sicherungsrings **1** auf die Profilierung **24** am ersten Teil **2** wird, wie folgt, praktiziert:

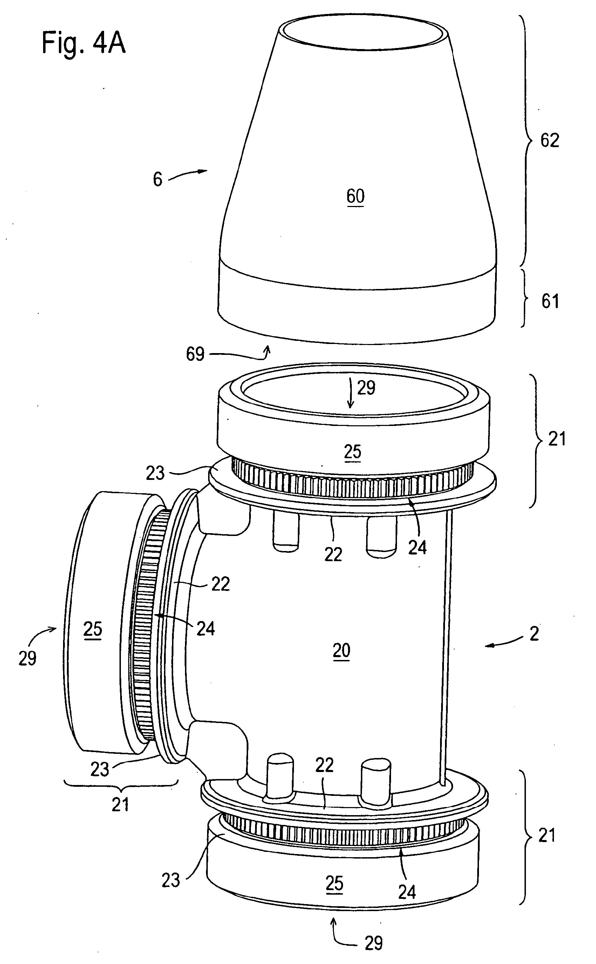

Figur 4A: Das Transferstück **6** wird mit seiner Zylinderpartie **61** voran dem zu bestückenden Abgang **21** am ersten Teil **2** axial zugewandt angenähert.

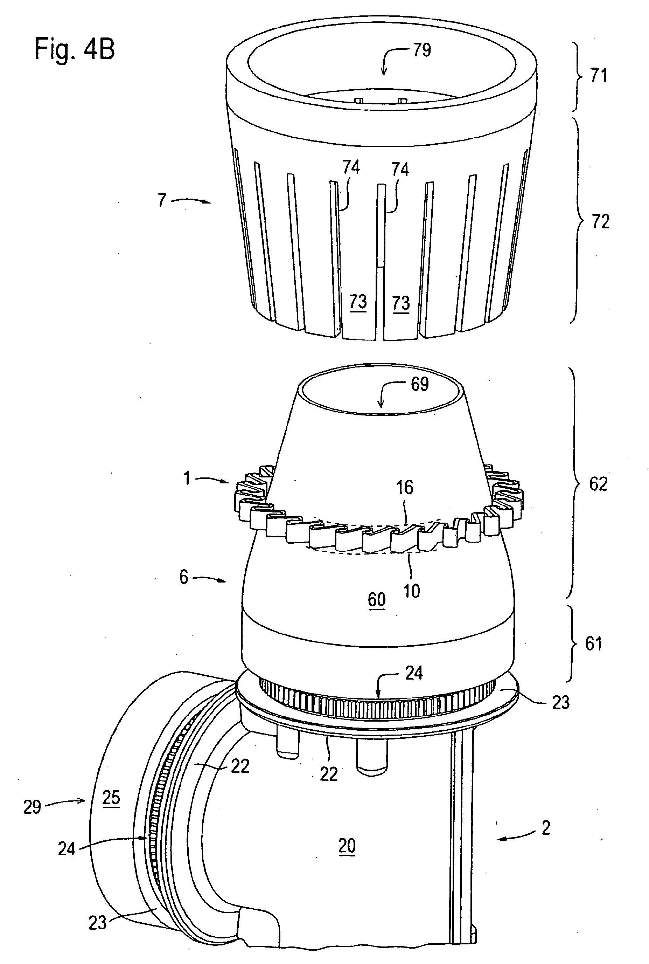

Figur 4B: Das Transferstücks **6** ist bis an die Profilierung **24** heran an den Abgang **21** angedockt. Per Hand wird der Sicherungsrings **1** unter elastischer Aufweitung vom freien Ende der Konuspartie **62** auf diese aufgeschoben, z.B. etwa bis in den mittleren Bereich. Das Schiebestück **7** wird mit seiner Spreizpartie **72** voran der Konusparkie **62** des Transferstücks **6** axial zugewandt angenähert.

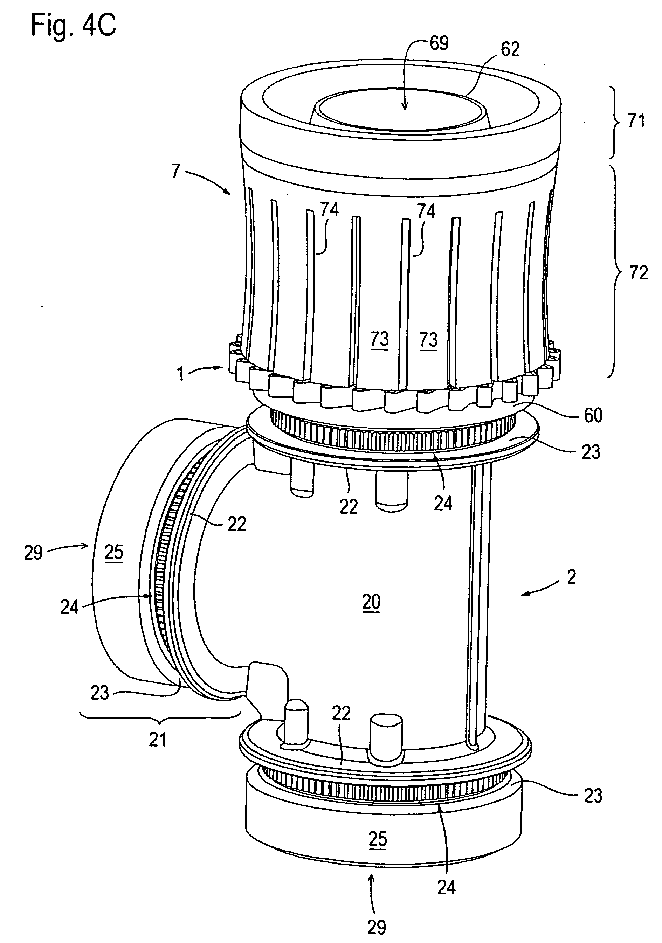

Figur 4C: Mittels des Schiebestücks **7** wird der Sicherungsring **1** weiter über den Aussenmantel **60** des Transferstücks **6** bis in die Ringnut **23** des ersten Teils **2** befördern. Hierbei stossen die freien Enden der sich sukzessive weiter spreizenden Zungensegmente **73** an den Sicherungsring **1.** Zugleich weitet sich der Sicherungsring **1** weiter auf, um in die Ringnut **23** geschoben zu werden. Der Flansch **22** bildet für den Sicherungsring **1** beim Hineinspringen in die Ringnut **23** eine zusätzliche Prellwand.

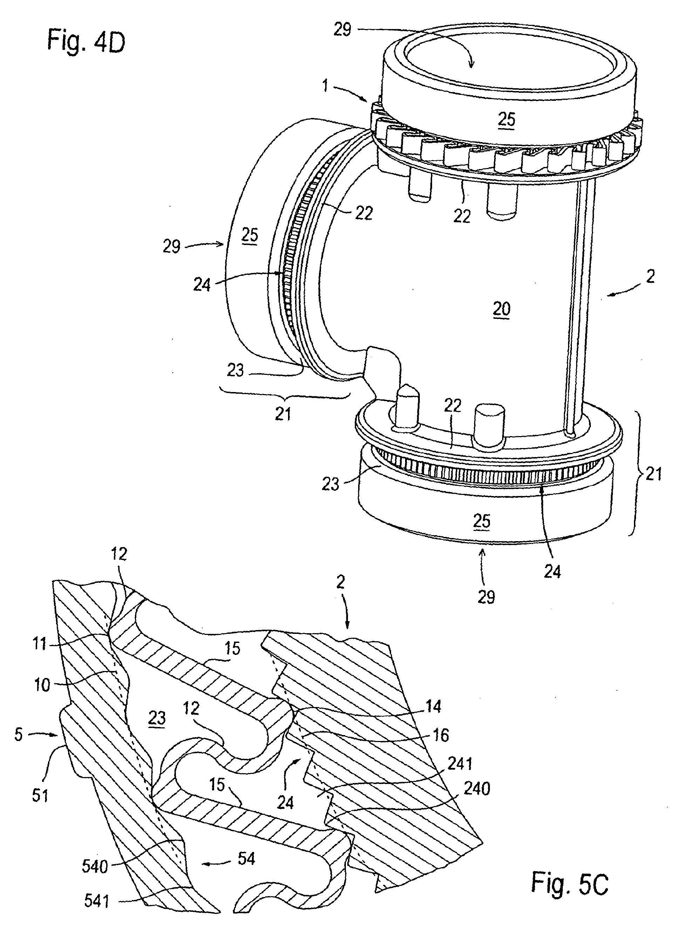

Figur 4D: Der in der Ringnut **23** auf der Profilierung **24** sitzende Sicherungsring **1** hat sich auf den Aussendurchmesser der Profilierung **24** elastisch verengt. Zunächst wird das Schiebestück **7** vom Transferstück **6** abgezogen und schliesslich das Transferstück **6** vom Abgang **21.** Nun kann zur Komplettierung der Sicherungsanordnung das zweite Teil 5, vorzugsweise in Gestalt einer Überwurfmutter, auf das Aussengewinde **25** des mit dem Sicherungsring 1 bestückten Abgangs **21** aufgeschraubt werden.

### Figuren 5A bis 5C

Im vollständig montierten Zustand, bei in die Ringnut **23** am ersten Teil **2** eingebrachtem Sicherungsring **1** und miteinander verschraubtem ersten und zweiten Teil 2,5, kommen die zweiten Rastelemente **14** des Sicherungsrings **1** in den im Prinzip eckigen Aussparungen **241** der Profilierung **24** am ersten Teil **2** zu liegen und werden darin von den zweiseitig flankierenden Spitzen **240** fest in Position gehalten. Bei entsprechender Dimensionierung können zwischen zwei belegten Aussparungen **241** eine oder mehrere Aussparungen **241** frei bleiben. Zugleich kommen in den Mulden **541** der Gegenprofilierung **54** am zweiten Teil **5** die ersten Rastelemente **11** des Sicherungsrings **1** zu liegen und werden darin von den zweiseitig flankierenden Erhebungen **540** temporär in Position gehalten.

Die sich jeweils zwischen einem ersten Rastelement **11** und einem zweiten Rastelement **14** sich innerhalb der Ringnuten **23**,**53** erstreckenden zweiten Verbindungsstege **15** des Sicherungsrings **1** sind der Löserichtung des zweiten Teils **5** sich schräg entgegenstemmend angeordnet Zur Anzugsrichtung des zweiten Teils **5** jedoch stehen die zweiten Verbindungsstege **15** gleichsinnig schräg. Damit wird beim Abschrauben des zweiten Teils **5** vom ersten Teil **2** ein Lösemoment erforderlich, das grösser ist als das Anzugsmoment beim Aufschrauben des zweiten Teils **5.** In der Konsequenz entsteht somit für das aufgeschraubte zweite Teil **5** eine Hemmung gegen unbeabsichtigtes Lösen, wie es sonst durch Vibrationen verursacht werden könnte.

Mit der Bestimmung der Steilheit in der Wellenstruktur, d.h. an den Erhebungen **540** und Mulden **541**, der Wahl der von den S-förmigen Verbindungsstegen **12** generierten Federkraft, der Winkelausrichtung der zweiten Verbindungsstege **15** und der Geometrie der ersten Rastelemente **11** lässt sich das zum Abschrauben des zweiten Teils **5** vom ersten Teil **2** erforderliche Lösemoment bzw. die Intensität der L6sehemrnung als definierte Grösse einstellen.

## Patentansprüche

1. Sicherungsanordnung für eine Verschraubung, bestehend aus:
a) einem ersten Teil (**2**) mit einem Aussengewinde (**25**) und einer dazu benachbarten Profilierung (**24**);
b) einem zweiten Teil (**5**), das mit dem ersten Teil (**2**) verschraubbar ist und ein zum Aussengewinde (**25**) des ersten Teils (**2**) komplementäres Innengewinde (**55**) sowie eine dazu benachbarte Gegenprofilierung (**54**) besitzt;
c) einem zwischen dem ersten Teil (**2**) und dem zweiten Teil (**5**) einsetzbaren Sicherungsring (**1**), der einen Aussenumfang (**10**) und einen Innenumfang (**16**) aufweist, wobei:
ca) am Aussenumfang (**10**) erste Rastelemente (**11**) angeordnet sind, welche mit der Gegenprofilierung (**54**) in Eingriff stehen;
cb) am Innenumfang (**16**) des Sicherungsrings (**1**) zweite Rastelemente (**14**) angeordnet sind, welche mit der Profilierung (**24**) in Eingriff sind; und
cc) zwischen den ersten Rastelementen (**11**) und den zweiten Rastelementen (**14**) Verbindungsstege (**12**,**15**) liegen, **dadurch gekennzeichnet,**
**dass**,
d) von jedem ersten Rastelement (**11**) ein erster S-förmig gekrümmter Verbindungssteg (**12**) abgeht, der sich zu einem benachbarten zweiten Rastelement (**14**) erstreckt und von diesem ersten Rastelement (**11**) zugleich ein zweiter gerade erstreckender Verbindungssteg (**15**) abgeht, der sich zu einem nächsten zweiten Rastelement (**14**) erstreckt; wobei die ersten und zweiten Rastelemente (11, 14) die Gestalt von konvex geformten Nocken haben, und die ersten Verbindungsstege (12) eine geringere Biegesteifigkeit als die zweiten Verbindungsstege (15) aufweisen, und
e) die Gegenprofilierung (**54**) mit den daran anliegenden ersten Rastelementen (**11**) beim Abschrauben des zweiten Teils (**5**) ein Lösemoment erfordern, das grösser ist als das Anzugsmoment beim Aufschrauben des zweiten Teils (**5**).

2. Sicherungsanordnung nach Anspruch 1, **dadurch gekennzeichnet, dass**
a) die ersten und zweiten Verbindungsstege (**12**,**15**) in alternierender Folge angeordnet sind, indem sich an beide Enden jedes ersten Verbindungsstegs (**12**) jeweils ein zweiter Verbindungssteg (**15**) anschliesst;
b) die ersten und zweiten Verbindungsstege (**12**,**15**) einen unterschiedlichen Konturverlauf und somit auch unterschiedliche Biegesteifigkeiten haben;
c) am Aussenumfang (**10**) sich jeweils ein erstes Rastelement (**11**) am Übergang von einem ersten Verbindungssteg (**12**) zu einem zweiten Verbindungssteg (**15**) befindet; und
d) am Innenumfang (**16**) sich jeweils ein zweites Rastelement (**14**) am Übergang von einem ersten Verbindungssteg (**12**) zu einem zweiten Verbindungssteg (**15**) befindet.

3. Sicherungsanordnung nach zumindest einem der Ansprüche 1 oder **2**, **dadurch gekennzeichnet, dass**
a) die Profilierung (**24**) am ersten Teil (**2**) als äusserlich radial umlaufende Verzahnung, gebildet aus alternierend aufeinander folgenden Spitzen (**240**) und Aussparungen (**241**) beschaffen ist und im montierten Zustand, bei auf das erste Teil (**2**) aufgebrachtem Sicherungsring (**1**), in den Aussparungen (**241**) die zweiten Rastelemente (**14**) des Sicherungsrings (**1**) zu liegen kommen; und
b) die Gegenprofilierung (**54**) am zweiten Teil (**5**) am Boden einer Ringnut (**53**) als innerlich radial umlaufende Wellenstruktur, gebildet aus alternierend aufeinander folgenden Erhebungen (**540**) und Mulden (**541**), beschaffen ist und im weiter montierten Zustand, bei miteinander verschraubtem ersten und zweiten Teil (**2**,**5**), in den Mulden (**541**) die ersten Rastelemente (**11**) des Sicherungsrings (**1**) zu liegen kommen.

4. Sicherungsanordnung nach den Ansprüchen **1** und **3**, **dadurch gekennzeichnet, dass**
a) im montierten Zustand bei auf das erste Teil (**2**) aufgebrachtem Sicherungsring (**1**) und miteinander verschraubtem ersten und zweiten Teil (**2**,**5**) die sich jeweils zwischen einem ersten Rastelement (**11**) und einem zweiten Rastelement (**14**) sich innerhalb der Ringnuten (**23**,**53**) erstreckenden zweiten Verbindungsstege (**15**) des Sicherungsrings (**1**) der Löserichtung des zweiten Teils (**5**) schräg entgegenstemmend und zur Anzugsrichtung gleichsinnig schräg angeordnet sind; und
b) das beim Abschrauben des zweiten Teils (**5**) vom ersten Teil (**2**) erforderliche Lösemoment mit der Wahl der Steilheit in der Wellenstruktur, d.h. an den Erhebungen (**540**) und Mulden (**541**), der Wahl der von den S-förmigen Verbindungsstegen (**12**) generierten Federkraft, der Winkelausrichtung der zweiten Verbindungsstege (**15**) und der Geometrie der ersten Rastelemente (**11**) einstellbar ist.

5. Sicherungsanordnung nach zumindest einem der Ansprüche 1 bis 4, **dadurch gekennzeichnet, dass**
a) das erste Teil (**2**) die Gestalt eines Fittings mit einem Mittelstück (**20**), daran ansetzenden Abgängen (**21**) und einem Durchgang (**29**) hat;
b) die Abgänge (**21**) jeweils mit einem nach aussen endenden Aussengewinde (**25**), einer sich daran anschliessenden Ringnut (**23**), in welcher die Profilierung (**24**) angeordnet ist, und einem die Ringnut (**23**) zum Mittelstück (**20**) abgrenzenden Flansch (**22**) versehen sind; und
c) das zweite Teil (**5**) die Gestalt einer Überwurfmutter mit einer Aussenprofilierung (**51**) zum Erfassen bei der Montage hat.

6. Sicherungsanordnung nach zumindest einem der Ansprüche 1 bis 5, **dadurch gekennzeichnet, dass**
a) zur Montage des Sicherungsrings (**1**) auf der Profilierung (**24**) des ersten Teils (**2**) ein Transferstück (6) und ein Schiebestück (**7**) vorgesehen sind;
b) das Transferstück (**6**) eine Zylinderpartie (**61**) und eine sich daran anschliessende, zu ihrem freien Ende hin verjüngende Konuspartie (**62**) sowie intern der Zylinderpartie (**61**) einen inneren Freiraum (**69**) zur Aufnahme des Bereichs am Abgang (**21**) hat, welcher der Profilierung (**24**) zum freien Ende des Abgangs (**21**) hin vorgelagert ist;
c) die Einstecktiefe des Abgangs (**21**) in das Transferstück (**6**) sind durch einen Anschlag begrenzt und die Aussengestalt des Transferstücks (**6**) durch dessen Aussenmantel (**60**) definiert;
d) das Schiebestück (**7**) eine Zylinderpartie (**71**) und eine sich daran anschliessende Spreizpartie (**72**) mit einem inneren Freiraum (**79**) hat, und die Spreizpartie (**72**) durch systematisch axial angeordnete Schlitze (**74**) eine Vielzahl von elastischen Zungensegmenten (**73**) aufweist;
e) der Freiraum (**79**) im Schiebestück (**7**) komplementär zur Aussengestalt des Transferstücks (**6**) beschaffen ist;
f) die von den Zungensegmenten (**73**) umrandete Eintrittsöffnung in das Schiebestück (**7**) zumindest der Grösse des Durchmessers am freien Ende der Konuspartie (**62**) des Transferstücks (**6**) entspricht und sich der Innendurchmesser am freien Ende der Spreizpartie (**72**) elastisch zumindest bis auf den Aussendurchmesser der Zylinderpartie (**61**) des Transferstücks (**6**) aufweiten lässt, um den zunächst auf die Konuspartie (**62**) des Transferstücks (**6**) aufgesteckten Sicherungsring (**1**) mittels des Schiebestücks (**7**) weiter über den Aussenmantel (**60**) bis in die Ringnut (**23**) des ersten Teils (**2**) zu befördern; und
g) der beim Transport über den Aussenmantel (**60**) elastisch aufgeweitete Sicherungsring (**1**) in der bestimmungsgemässen Endlage in der Ringnut (**23**) liegend, die darin vorhandene Profilierung (**24**) umspannt.

7. Sicherungsanordnung nach zumindest einem der Ansprüche **1** bis **6, dadurch gekennzeichnet, dass** der Sicherungsring (**1**) aus einem elastischen Kunststoff besteht und im Spritzgussverfahren hergestellt ist.

## Claims

1. Securing arrangement for a screwed connection, comprising:
a) a first part (2) having an external thread (25) and a profiling (24) adjacent to said external thread;
b) a second part (5), which can be screwed to the first part (2) and has an internal thread (55) which is complementary to the external thread (25) of the first part (2) and a counter-profiling (54) adjacent to said internal thread;
c) a securing ring (1) which can be inserted between the first part (2) and the second part (5) and which has an outer circumference (10) and an inner circumference (16), wherein:
ca) first latching elements (11) which engage with the counter-profiling (54) are arranged on the outer circumference (10);
cb) second latching elements (14) which engage with the profiling (24) are arranged on the inner circumference (16) of the securing ring (1); and
cc) connecting webs (12, 15) are situated between the first latching elements (11) and the second latching elements (14), **characterized in that**
d) a first connecting web (12), which is curved in an S shape, departs from each first latching element (11) and extends to an adjacent second latching element (14) and, at the same time, a second connecting web (15), which extends rectilinearly, departs from this first latching element (11) and extends to a subsequent second latching element (14), wherein the first and second latching elements (11, 14) have the form of convexly shaped projections, and the first connecting webs (12) have a lower flexural rigidity than the second connecting webs (15), and
e) when unscrewing the second part (5), the counter-profiling (54) together with the first latching elements (11) bearing thereon require a release torque which is greater than the tightening torque when screwing on the second part (5).

2. Securing arrangement according to Claim 1, **characterized in that**
a) the first and second connecting webs (12, 15) are arranged in an alternating sequence **in that** both ends of each first connecting web (12) are respectively adjoined by a second connecting web (15);
b) the first and second connecting webs (12, 15) have a different contour profile and hence also different flexural rigidities;
c) a first latching element (11) is in each case situated on the outer circumference (10) at the transition from a first connecting web (12) to a second connecting web (15); and
d) a second latching element (14) is in each case situated on the inner circumference (16) at the transition from a first connecting web (12) to a second connecting web (15).

3. Securing arrangement according to at least one of Claims 1 and 2, **characterized in that**
a) the profiling (24) on the first part (2) is constituted as an external radially encircling toothing formed from an alternating succession of points (240) and recesses (241), and, in the mounted state with the securing ring (1) fitted onto the first part (2), the second latching elements (14) of the securing ring (1) come to lie in the recesses (241); and
b) the counter-profiling (54) on the second part (5) is constituted, on the bottom of an annular groove (53), as an internal radially encircling wavy structure formed from an alternating succession of elevations (540) and depressions (541), and, in the further-mounted state with the first and second parts (2, 5) screwed together, the first latching elements (11) of the securing ring (1) come to lie in the depressions (541).

4. Securing arrangement according to Claims 1 and 3, **characterized in that**
a) in the mounted state with the securing ring (1) fitted onto the first part (2) and with the first and second parts (2, 5) screwed together, the second connecting webs (15) of the securing ring (1), which in each case extend between a first latching element (11) and a second latching element (14) within the annular grooves (23, 53), are arranged obliquely opposed to the release direction of the second part (5) and obliquely in the same direction with respect to the tightening direction; and
b) the release torque required when unscrewing the second part (5) from the first part (2) can be adjusted with the selection of the gradient in the wavy structure, i.e. at the elevations (540) and depressions (541), with the selection of the spring force generated by the S-shaped connecting webs (12), the angular orientation of the second connecting webs (15) and the geometry of the first latching elements (11).

5. Securing arrangement according to at least one of Claims 1 to 4, **characterized in that**
a) the first part (2) has the form of a fitting with a central piece (20), outlets (21) attached thereto and a through-passage (29);
b) the outlets (21) are in each case provided with an outwardly terminating external thread (25), an adjoining annular groove (23) in which the profiling (24) is arranged, and a flange (22) delimiting the annular groove (23) with respect to the central piece (20); and
c) the second part (5) has the form of a union nut with an outer profiling (51) for gripping during the mounting operation.

6. Securing arrangement according to at least one of Claims 1 to 5, **characterized in that**
a) a transfer piece (6) and a pushing piece (7) are provided for mounting the securing ring (1) on the profiling (24) of the first part (2);
b) the transfer piece (6) has a cylindrical portion (61) and an adjoining conical portion (62) which tapers towards its free end, and also, inside the cylindrical portion (61), an inner clearance (69) for receiving the region on the outlet (21) that is arranged upstream of the profiling (24) towards the free end of the outlet (21);
c) the depth of insertion of the outlet (21) into the transfer piece (6) is limited by a stop and the outer shape of the transfer piece (6) is defined by the outer casing (60) thereof;
d) the pushing piece (7) has a cylindrical portion (71) and an adjoining expansion portion (72) with an inner clearance (79), and the expansion portion (72), by virtue of slots (74) which are arranged axially in a systematic manner, has a plurality of elastic tongue segments (73);
e) the clearance (79) in the pushing piece (7) is designed to be complementary to the outer shape of the transfer piece (6);
f) the inlet opening into the pushing piece (7) enclosed by the tongue segments (73) corresponds at least to the size of the diameter at the free end of the conical portion (62) of the transfer piece (6), and the inner diameter at the free end of the expansion portion (72) can be widened elastically at least to the size of the outer diameter of the cylindrical portion (61) of the transfer piece (6) in order that the securing ring (1), which is first plugged onto the conical portion (62) of the transfer piece (6), can be conveyed by means of the pushing piece (7) further over the outer casing (60) and into the annular groove (23) of the first part (2); and
g) the securing ring (1), which is wound elastically as it is transported over the outer casing (60), is located in the intended end position in the annular groove (23) while encompassing the profiling (24) which is present therein.

7. Securing arrangement according to at least one of Claims 1 to 6, **characterized in that** the securing ring (1) is made of an elastic plastic and is produced by injection moulding.

## Revendications

1. Agencement de sécurité pour un boulonnage, constitué des éléments suivants :
a) une première partie (2) avec un filetage extérieur (25) et un profilage (24) adjacent à celui-ci ;
b) une deuxième partie (5) qui peut être vissée à la première partie (2) et qui présente un filetage intérieur (55) complémentaire du filetage extérieur (25) de la première partie (2) ainsi qu'un profilage conjugué (54) adjacent au filetage intérieur ;
c) une bague de sécurité (1) pouvant être insérée entre la première partie (2) et la deuxième partie (5), qui présente une périphérie extérieure (10) et une périphérie intérieure (16),
ca) des premiers éléments d'encliquetage (11) étant disposés sur la périphérie extérieure (10), lesquels sont en prise avec le profilage conjugué (54) ;
cb) des deuxièmes éléments d'encliquetage (14) étant disposés sur la périphérie intérieure (16) de la bague de sécurité (1), lesquels sont en prise avec le profilage (24) ; et
cc) des nervures de connexion (12, 15) étant prévues entre les premiers éléments d'encliquetage (11) et les deuxièmes éléments d'encliquetage (14),
**caractérisé en ce**
d) **qu'**une première nervure de connexion (12) courbée en forme de S fait saillie depuis chaque premier élément d'encliquetage (11), laquelle s'étend jusqu'à un deuxième élément d'encliquetage adjacent (14) et une deuxième nervure de connexion (15) s'étendant en ligne droite fait saillie en même temps depuis ce premier élément d'encliquetage (11), laquelle s'étend jusqu'à un deuxième élément d'encliquetage suivant (14) ; les premier et deuxième éléments d'encliquetage (11, 14) ayant la forme de cames de forme convexe, et les premières nervures de connexion (12) présentant une rigidité en flexion plus faible que les deuxièmes nervures de connexion (15), et
e) **que** le profilage conjugué (54), avec les premiers éléments d'encliquetage (11) s'appliquant contre lui, lors du dévissage de la deuxième partie (5) nécessitent un couple de desserrage qui est supérieur au couple de vissage lors du vissage de la deuxième partie (5).

2. Agencement de sécurité selon la revendication 1, **caractérisé en ce que**
a) les première et deuxième nervures de connexion (12, 15) sont disposées en succession alternée, une deuxième nervure de connexion (15) se raccordant à chaque fois aux deux extrémités de chaque première nervure de connexion (12) ;
b) les première et deuxième nervures de connexion (12, 15) ont un contour d'allure différente et donc ont aussi des rigidités en flexion différentes ;
c) sur la périphérie extérieure (10), à chaque fois un premier élément d'encliquetage (11) se trouve au niveau de la transition d'une première nervure de connexion (12) à une deuxième nervure de connexion (15) ; et
d) sur la périphérie intérieure (16), à chaque fois un deuxième élément d'encliquetage (14) se trouve au niveau de la transition d'une première nervure de connexion (12) à une deuxième nervure de connexion (15).

3. Agencement de sécurité selon au moins l'une quelconque des revendications 1 ou 2, **caractérisé en ce que**
a) le profilage (24) sur la première partie (2) est réalisé sous forme de denture s'étendant radialement à l'extérieur, formée d'une alternance successive de pointes (240) et d'évidements (241), et dans l'état monté, lorsque la bague de sécurité (1) est montée sur la première partie (2), les deuxièmes éléments d'encliquetage (14) de la bague de sécurité (1) viennent se placer dans les évidements (241) ; et
b) le profilage conjugué (54) sur la deuxième partie (5) est réalisé sur le fond d'une rainure annulaire (53) en tant que structure ondulée radialement périphérique à l'intérieur, formée d'une alternance successive de rehaussements (540) et de creux (541), et dans l'état monté ultérieur, lorsque la première et la deuxième partie (2, 5) sont vissées ensemble, les premiers éléments d'encliquetage (11) de la bague de sécurité (1) viennent se placer dans les creux (541).

4. Agencement de sécurité selon les revendications 1 et 3, **caractérisé en ce que**
a) dans l'état monté, lorsque la bague de sécurité (1) est montée sur la première partie (2) et que la première et la deuxième partie (2, 5) sont vissées ensemble, les deuxièmes nervures de connexion (15) de la bague de sécurité (1) s'étendant à chaque fois entre un premier élément d'encliquetage (11) et un deuxième élément d'encliquetage (14) à l'intérieur des rainures annulaires (23, 53), sont disposées en partant en biais depuis la direction de desserrage de la deuxième partie (5) et en biais dans le même sens vers la direction de vissage ; et
b) le couple de desserrage nécessaire lors du dévissage de la deuxième partie (5) de la première partie (2) peut être ajusté en choisissant la raideur de la structure ondulée, c'est-à-dire au niveau des rehaussements (540) et des creux (541), en choisissant la force de ressort produite par les nervures de connexion (12) en forme de S, l'orientation angulaire des deuxièmes nervures de connexion (15) et la géométrie des premiers éléments d'encliquetage (11).

5. Agencement de sécurité selon au moins l'une quelconque des revendications 1 à 4,
**caractérisé en ce que**
a) la première partie (2) a la forme d'un raccord avec une pièce centrale (20), des départs (21) s'y raccordant et un passage (29) ;
b) les départs (21) sont pourvus à chaque fois d'un filetage extérieur (25) se terminant vers l'extérieur, d'une rainure annulaire s'y raccordant (23), dans laquelle est disposé le profilage (24), et d'une bride (22) limitant la rainure annulaire (23) par rapport à la pièce centrale (20) ; et
c) la deuxième partie (5) a la forme d'un écrou d'accouplement avec un profilage extérieur (51) devant être saisi lors du montage.

6. Agencement de sécurité selon au moins l'une quelconque des revendications précédentes 1 à 5,
**caractérisé en ce que**
a) pour le montage de la bague de sécurité (1) sur le profilage (24) de la première partie (2), on prévoit une pièce de transfert (6) et une pièce de coulissement (7) ;
b) la pièce de transfert (6) présente une partie cylindrique (61) et une partie conique (62) s'y raccordant, se rétrécissant vers son extrémité libre, ainsi qu'à l'intérieur de la partie cylindrique (61), un espace libre intérieur (69) pour recevoir la région au niveau du départ (21), qui est monté avant le profilage (24) en direction de l'extrémité libre du départ (21) ;
c) la profondeur d'enfoncement du départ (21) dans la pièce de transfert (6) est limitée par une butée et la forme extérieure de la pièce de transfert (6) est définie par son enveloppe extérieure (60);
d) la pièce coulissante (7) a une partie cylindrique (71) et une partie d'écartement (72) s'y raccordant avec un espace libre intérieur (79), et la partie d'écartement (72) présente une pluralité de segments de langues élastiques (73) formés par des fentes (74) disposées systématiquement axialement ;
e) l'espace libre (79) dans la pièce coulissante (7) est réalisé de manière complémentaire à la forme extérieure de la pièce de transfert (6) ;
f) l'ouverture d'entrée bordée par les segments de langues (73) dans la pièce coulissante (7) correspond au moins à la dimension du diamètre à l'extrémité libre de la partie conique (62) de la pièce de transfert (6), et le diamètre intérieur à l'extrémité libre de la partie d'écartement (72) peut être élargi élastiquement au moins jusqu'au diamètre extérieur de la partie cylindrique (61) de la pièce de transfert (6), afin de pousser la bague de sécurité (1) enfoncée initialement sur la partie conique (62) de la pièce de transfert (6) au moyen de la pièce coulissante (7) davantage sur l'enveloppe extérieure (60) jusque dans la rainure annulaire (23) de la première partie (2) ; et
g) la bague de sécurité (1) élargie élastiquement lors de son déplacement sur l'enveloppe extérieure (60) se trouve dans la position finale conforme dans la rainure annulaire (23) qui entoure le profilage (24) disposé dans celle-ci.

7. Agencement de sécurité selon au moins l'une quelconque des revendications 1 à 6, **caractérisé en ce que** la bague de sécurité (1) se compose d'un plastique élastique et est fabriquée par un procédé de moulage par injection.
